# FASCICULE DE BREVET EUROPEEN

(11) **EP 2 989 349 B1**
(45) Date de publication et mention de la délivrance du brevet: **01.01.2020**
(21) Numéro de dépôt: 14715324.1
(22) Date de dépôt: 07.04.2014
(51) Int. Cl.: F16H 25/20, F02K 7/06

(54) **ACTIONNEUR ELECTRIQUE A TIGE FILETEE**
ELEKTRISCHER STELLANTRIEB MIT GEWINDESTANGE
ELECTRIC ACTUATOR WITH THREADED ROD

(30) Priorité: 24.04.2013 FR 1353733
(43) Date de publication de la demande: 02.03.2016
(73) Titulaire: Sonceboz S.A., 2605 Sonceboz (CH)
(72) Inventeur: FOUCAUT, Antoine, 70190 Montarlot les Rioz (FR); THIERRY, Benjamin, 25120 Maiche (FR); ENSMINGER, Julien, 67530 Klingenthal (FR)
(74) Mandataire: IP Trust
(86) Numéro de dépôt international: PCT/EP2014/056909
(87) Numéro de publication internationale: WO 2014/173667

(56) Documents cités:
- EP-A1- 1 089 019
- EP-A1- 1 928 074
- WO-A2-03/075434
- WO-A2-2013/027197
- SU-A1- 838 201
- US-A- 6 111 491

## Description

### Domaine de l'invention

La présente invention concerne le domaine des actionneurs électriques linéaires destinés au déplacement d'un organe d'entraînement, sur une course limitée et accessoirement au déplacement angulaire d'un organe, par l'intermédiaire d'une conversion du mouvement linéaire en mouvement rotatif.

Ces actionneurs électriques linéaires sont généralement utilisés dans le domaine automobile pour piloter des vannes de fluide utiles au moteur ou encore mouvoir des éléments améliorant le confort du conducteur. (Régulation débit d'air d'admission, débit de fluide dans les suspensions réglables; mobilité des projecteurs avant ou des systèmes d'affichage tête haute sur le pare-brise etc...).

### Etat de la technique

Le principe général de tels actionneurs est connue et décrit par exemple dans la demande de brevet internationale WO2010/027701. Cette demande de brevet décrit un actionneur avec une vis comprenant deux parties filetées avec des filetages croisées engagées par des moteurs tournant en sens inverse afin de déplacer la vis en translation avec une force supérieure qu'avec un système ne comprenant qu'un moteur. Les filetages croisés permettent d'annuler le couple résultant exercé sur la vis par les deux moteurs.

Une autre demande de brevet WO2013027197 décrit un actionneur linéaire électrique comprenant un moteur électrique avec un rotor et un stator, un boîtier, et un système vis-écrou pour le déplacement d'un organe à déplacer au moins en translation dans une direction A correspondant à l'axe de rotation du rotor, le système vis-écrou comprenant une vis avec une première portion filetée et un premier écrou avec un filetage complémentaire engageant la première portion filetée, le premier écrou étant couplé en rotation au rotor. La vis comprend une deuxième portion filetée et le système vis- écrou comprend un deuxième écrou engageant la deuxième portion filetée, la deuxième portion filetée et le deuxième écrou étant configurés pour appliquer un facteur de réduction dans le déplacement linéaire de la vis (par rapport au déplacement linéaire dû à la première portion filetée et au premier écrou seuls), les première et deuxième portions filetées ayant des filetages croisés l'un par rapport à l'autre.

Dans une forme d'exécution, la première portion filetée est adjacente à la deuxième portion filetée.

Le brevet européen EP1561639 décrit un actionneur destiné au réglage de la position horizontale ou verticale de phares automobiles performants même dans des conditions environnementales extrêmes, en particulier pour des plages de température allant de -40° C à +120 °C, et être résistants à la poussière, à l'eau et au sel.

Le brevet européen EP1791242 décrit un actionneur pour le déplacement linéaire d'un organe à commander comporte un boîtier, un moteur et un système vis écrou. Le moteur, qui est de préférence un moteur pas à pas, comprend un stator comportant des bobines et un rotor comportant des aimants permanents, le rotor étant supporté, à une de ses extrémités, par un palier sous forme de roulement à billes, comprenant un chemin de roulement fixé au boîtier, et un chemin de roulement à débit, solidaire du rotor.

La demande de brevet internationale WO03048599 décrit un actionneur à vis comprenant un élément d'écrou interagissant avec deux filets de vis coaxiaux séparés et deux vis qui présentent chacune un filetage différent correspondant aux filets de vis de l'élément d'écrou.

### Inconvénients de l'art antérieur

Dans beaucoup d'applications, les actionneurs doivent respecter les conditions de travails du domaine automobile qui impose des plages de températures très larges, couramment de -40°C à +140°C sans pertes importantes des performances.

Les actionneurs linaires électriques de l'état de la technique sont dans la grande majorité des cas, construits à partir d'un moteur rotatif couplé à une transformation de mouvement pour générer au final une translation. La solution la plus simple est en effet d'utiliser un rotor monté rotatif sur des paliers ou roulements, lequel rotor entraine un système vis écrou qui génère la translation de l'organe de commande.

Cette solution présente de nombreux avantages de compacité et de fiabilité dans des environnements sévères mais il s'avère que les performances de ces actionneurs chutent de façon importante des lors qu'ils sont utilisés à très basse température (entre -20°C et -40°C) et ce du fait de la variation de viscosité des graisses utilisées dans les roulements à bille et paliers.

Ce problème est compliqué à résoudre car il est possible de trouver des graisses qui restent fluide et lubrifient correctement entre + 25 et +140°C ou d'autres types qui le restent de -40° à +25°C mais les seules graisses qui permettent de réaliser la fonction de lubrification (résistance à la pression sans rupture du film) sans grosse variation de la viscosité (qui crée un frein sur le roulement) sur la totalité de la plage -40°C à +140°C sont limitées à de rares compositions à base de silicone.

Or cet élément silicone est proscrit dans la plupart des applications automobiles pour ses effets de dégazage et de pollution des éléments périphériques.

Il en résulte un réel problème à proposer des actionneurs linéaires automobiles travaillant de -40°C à +140°C, et offrant la lubrification requise pour assurer la durée de vie du produit, sans chutes de performances à froid, dû à la grande viscosité de la graisse qui freine le roulement de façon importante. Aujourd'hui la majorité des actionneurs linéaires de l'état de l'art sont basés sur la combinaison d'un moteur rotatif et d'un système vis écrou. Ceux ci perdent plus de la moitié de leur force lorsque l'on passe de 25°C et -40°C. Ce qui conduit à sur-dimensionner le moteur pour compenser cette perte et atteindre la spécification attendue par l'utilisateur.

### Principe de la solution proposée :

La solution selon l'invention proposée, consiste à simplifier la structure de ces actionneurs linéaires en supprimant les éléments de guidage en rotation du rotor tels que des roulements à billes ou paliers lisses et à guider directement l'ensemble rotorique par une liaison de type hélicoïdale, qui permet d'augmenter très sensiblement les performances à basses température.

A cet effet, l'invention concerne selon son acception la plus générale un actionneur électrique tel que décrit dans la revendication 1.

Selon une première variante, ledit moyen motorisé est constitué par un stator interagissant électromagnétiquement avec un rotor muni d'un aimant permanent, lié mécaniquement à ladite zone d'entraînement.

Avantageusement, ledit aimant est surmoulé sur l'axe fileté entrainant l'organe de commande.

Selon une deuxième variante, ledit moyen motorisé est constitué par une vis sans fin entraînant une roue dentée formant ladite zone d'entraînement.

Avantageusement, l'organe de commande est en liaison glissière avec un flasque, qui possède différentes positions angulaires permettant un réglage manuel de la position linéaire de l'organe de commande indépendamment de son déplacement piloté par le moteur électrique. Description détaillée d'un mode non limitatif de réalisation

La présente invention sera mieux comprise à la lecture de la description qui suit, se référant aux dessins annexés correspondant à des exemples non limitatifs de réalisation où :
- la figure 1 représente une vue en coupe longitudinale d'un premier exemple de réalisation
- la figure 2 représente une vue en coupe longitudinale d'un deuxième exemple de réalisation
- la figure 3 représente une vue en coupe longitudinale d'un troisième exemple de réalisation.
- la figure 4 représente une vue en coupe longitudinale d'un quatrième exemple de réalisation.

L'invention est décrite dans les exemples non limitatifs selon quatre modes de réalisations, permettant d'utiliser l'actionneur linaire simple tel que décrit ci-dessus ou en combinaison avec une transformation de mouvement en amont ou en aval pour offrir respectivement plus de réduction ou un actionneur rotatif constitué d'un actionneur linéaires selon l'invention couplé à un levier rotatif.

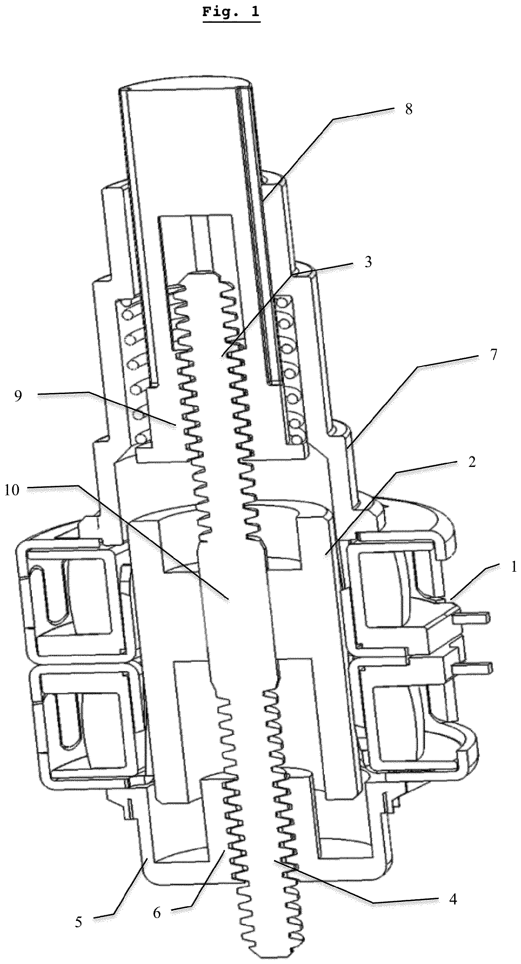

L'actionneur électrique selon la solution correspondant un premier exemple de réalisation illustré par la figure 1s comporte :
- Un stator polyphasé (1)
- Un rotor comportant un aimant multipolaire (2)
- Un axe présentant deux parties filetées distinctes (3, 4)
- Un premier flasque (5) fixe par rapport au stator (1) et portant un premier écrou (6) fixe lié au dit stator (1)
- Un second flasque (7) fixe par rapport au stator (1)
- Un organe de commande (8) comportant un second écrou (9), apte à se déplacer en translation sans rotation dans le second flasque (7) au moyen d'une liaison glissière.

L'ensemble électromagnétique constitué par le stator (1) et le rotor (2) rotatif entraine la partie centrale (10) de l'axe fileté selon un mouvement hélicoïdal imposé par la rotation du rotor (2) pour la composante rotative, et la liaison entre la première partie filetée (4) de l'ensemble rotorique avec le premier écrou fixe (6) pour la composante translation.

Le déplacement hélicoïdal de l'axe fileté entraine l'organe de commande (8) selon une translation pure par la liaison entre la seconde partie filetée (3) de la tige giletée avec le second écrou (9) solidaire de l'organe de commande (8).

Cette solution présente différents avantages :
Le premier avantage est de supprimer tout type de liaison pivot au niveau de l'axe central fileté en comparaison des systèmes existants. La suppression de ces roulements à billes ou paliers rotatifs évite la perte de couple liée à l'augmentation de la viscosité de la graisse.

Le rendement de la transformation de mouvement rotatif en mouvement linéaire est identique à celui de la solution traditionnelle vis couplé à un seul écrou. Le gain de couple au niveau des guidages (point précédent) est donc conservé totalement en termes de puissance disponible en sortie sur l'organe de commande linéaire.

Dans le cas où les deux portions filetées de l'axe central sont de directions opposées et de même pas, le déplacement de l'organe de sortie est le double de celui de l'ensemble rotorique, ce qui permet d'augmenter la vitesse de déplacement de l'organe de sortie à iso fréquence au stator. Cela constitue un avantage lorsque le pas de la vis ne peut plus être augmenté pour des raisons de difficulté de fabrication.

La construction de l'actionneur est fortement simplifiée et le nombre de composant fortement réduit ce qui présente un intérêt sur la réduction des couts des composants mais aussi sur les couts des machines d'assemblage ainsi que sur le temps du montage des produits.

Sur le plan dimensionnel, l'axe central comporte deux parties filetées (3, 4) et collabore avec deux écrous (6, 9) pour générer l'avance de l'organe de sortie (8). De ce fait sa longueur occupée pour la fonction de transformation de mouvement est un peu plus importante que celle d'une vis simple traditionnelle entrainée par un écrou rotatif. Mais en réalité cela se trouve compensé (pour les courses les plus courantes demandées en automobile, de l'ordre de 10mm) par la suppression des guidages du rotor. L'encombrement global de l'actionneur linéaire est donc équivalent pour des faibles courses, qui sont utilisées dans les applications de dosage d'air ou de mobilité des projecteurs.

Enfin la masse est fortement réduite par la suppression du roulement à bille nécessaire pour reprendre l'effort axial dans les solutions de l'état de l'art, et la solution prend tout son intérêt avec l'utilisation d'écrou en plastique qui porte l'axe central. Les pièces métalliques sont donc réduites à leur minimum, seulement au niveau des tôles magnétiques du stator, et à l'axe central qui présente une bonne tribologie pour fonctionner avec les écrous plastiques.

L'actionneur linaire correspondant à ce premier mode de réalisation comporte un stator diphasé qui entraine un ensemble rotorique constitué d'un aimant multipolaire fixé co-axialement sur un la zone centrale (10) de l'axe possédant une première partie filetée arrière, en prise avec un premier écrou lié à un flasque arrière agrafé sur le stator, et une seconde partie filetée, en prise avec un organe de sortie comportant un second écrou. Un flasque avant fixé au stator possède une liaison glissière permettant à l'organe de sortie de suivre une translation imposée par le mouvement hélicoïdal de l'ensemble rotorique.

Le pointeau en bout de l'organe de commande se déplace sur une course de 10mm, qui se décompose en un mouvement relatif de 5mm par rapport à l'ensemble rotorique auquel s'ajoutent les 5 mm de déplacement de l'ensemble rotorique par rapport à l'écrou fixe lié au flasque arrière. Pour cela la longueur de l'aimant est allongée de 5mm par rapport à la longueur du stator, ce qui permet de conserver le couple appliqué par le stator sur le rotor en dépit du déplacement axial de ce dernier.

De même l'organe de commande possède un dégagement en prolongement du second écrou de façon à laisser l'axe central de pénétrer de 5 mm pour effectuer sa course relative.

L'ensemble rotorique est guidé uniquement par les deux liaisons hélicoïdales croisées, la liaison glissière entre l'organe de sortie et le flasque avant permettant de compléter le guidage jusqu'à une référence fixe. Lorsque le rotor fait un tour, il avance d'une valeur équivalente au pas de l'écrou fixe, alors que l'organe de commande avance d'une valeur égale à la somme des pas des écrous fixe et mobile. Lorsque les deux parties filetées sont de direction opposées mais de même pas, le pas apparent de l'organe de commande correspond au double du pas de vis. Ce type de construction est avantageux pour des actionneurs requérant une forte compacité et une masse très réduite. Il est alors possible d'offrir un actionneur à bas cout dont les performances à basses températures sont obtenues à partir d'aimant à bas cout tels que les ferrites, car le couple n'est pas amputé de friction parasite importante en amont de la réduction du mouvement, comme c'est le cas sur les solutions de l'état de l'art.

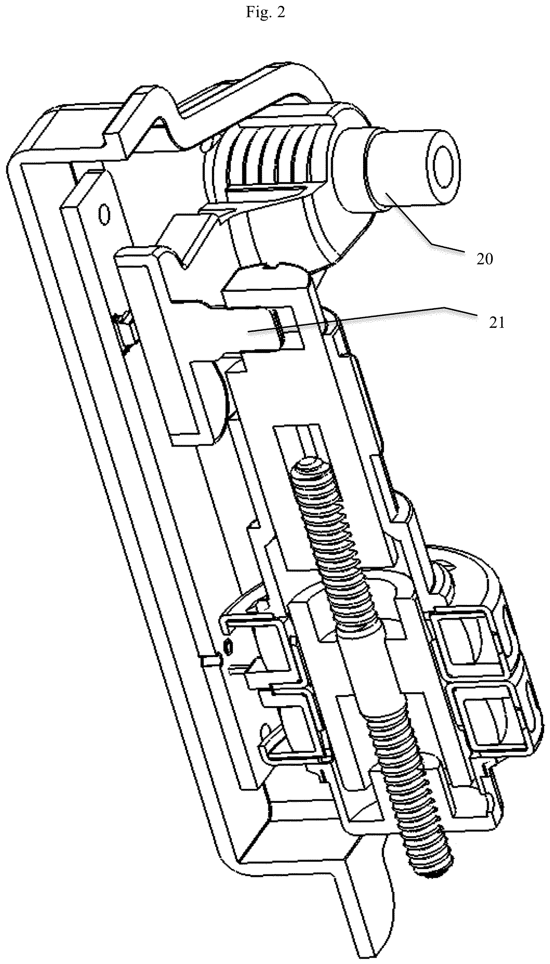

Dans le second mode de réalisation illustré par la figure 2, on associe un actionneur linéaire tel que décrit précédemment avec un levier rotatif (20) pour former un actionneur rotatif. La transformation de mouvement rotatif linéaire est réalisée par un ensemble rotorique parcourant un mouvement hélicoïdal et bénéficiant d'un guidage limitée aux liaisons vis/écrou. Ce premier étage permet d'avoir une réduction importante du mouvement dans un espace limité, de plus la vis métallique qui encaisse l'effort axial possède un grande rigidité, ce qui permet d'atteindre une grande précision de positionnement du chariot. Ce chariot transmet alors son mouvement à un levier rotatif (21) qui décrit un angle limité mais offre un couple important ainsi qu'une grande précision de positionnement, et ce avec une solution simple et peu couteuse.

Enfin cet actionneur possède des performances relativement stable avec la basse température en comparaison des solution existantes basées sur des guidages de rotor ou de vis par roulements à billes qui freinent à froid, ou encore des guidages par pression d'une forme conique sur une bille via un ressort, lesquelles ne permettent pas d'atteindre la durée de vie exigée dans l'automobile du fait de la friction métal/métal qui finit par créer de l'usure.

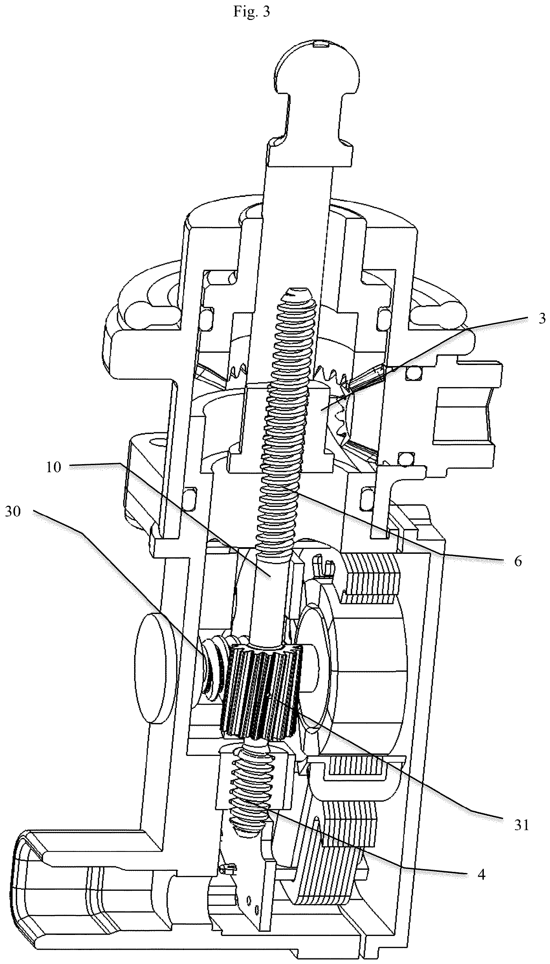

Le troisième mode de réalisation décrit en référence à la figure 3 concerne un actionneur linéaire qui se distingue des deux exemples de réalisation précédents par l'utilisation d'un réducteur à engrenage entre le moteur électrique d'entrainement et la transformation du mouvement singulière hélicoïdale revendiquée dans ce document.

Le moteur polyphasé entraine un rotor, sur lequel une vis sans fin (30) est encastrée, laquelle entraine une roue dentée (31), montée solidaire et coaxiale de la zone centrale (10) de l'axe possédant deux parties filetées distinctes (4, 6). Lorsque le rotor moteur entraine en rotation la roue dentée (31) au travers de la vis sans fin (30), un premier écrou fixe par rapport au boitier permet à l'ensemble formé par l'axe et la roue dentée (30) de suivre un mouvement héliocoïdal, lequel entraine ensuite l'organe de sortie au moyen de la seconde liaison hélicoïdale du second écrou situé à l'arrière de l'organe de sortie. La liaison glissière de l'organe de sortie, dans un flasque avant dont la rotation est bloquée par le moyeu de réglage, permet d'assurer une translation pure de cet organe de sortie.

Le moyeu de réglage possède une denture conique qui permet de modifier la position angulaire du flasque avant. Cette rotation du flasque avant impose la rotation de l'organe de sortie qui se visse sur la partie filetée avant de l'axe central, lorsque le moteur est à l'arrêt et que la vis sans fin bloque la rotation de l'axe central. Cette solution permet de réaliser un pré positionnement linéaire de l'organe de sortie qui est indépendante de la course dite électrique, qui sera déterminée par la rotation du moteur. Cet actionneur possède ainsi une course mécanique de pré réglage manuelle en parallèle de la course électrique imposée par la commande du moteur. Ce type de solution est utilisé notamment dans les actionneurs de réglage de hauteur des projecteurs avant de véhicule, qui sont réglés manuellement en usine lors de l'assemblage final du véhicule, et pour lesquels le moteurs permet un réglage automatiques de hauteurs de feux avec la charge du véhicule ou encore son accélération, pour éviter l'éblouissement des autres conducteurs.

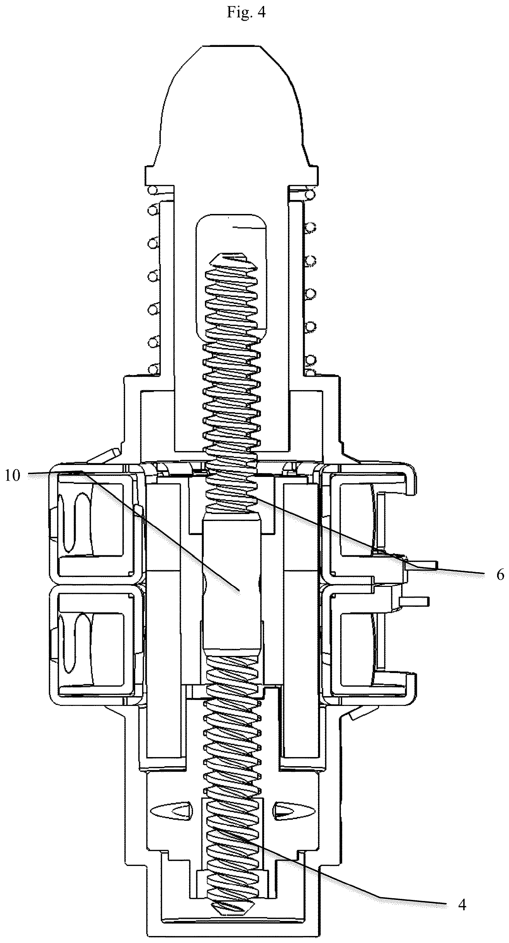

La figure 4 illustre un mode de réalisation similaire au premier mode de réalisation car il est basé sur l'association d'un ensemble rotorique simple, constitué d'un aimant surmoulé sur un axe central possédant deux partie filetées, l'une d'elle collaborant avec un écrou fixe lié au stator, la seconde partie filetée collaborant avec un organe de sortie comprenant un écrou et apte à se translater dans un flasque avant au travers d'une liaison glissière. Mais dans ce mode de réalisation, les angles d'hélice sont de même sens, seul les pas des deux parties filetées sont différents. Le mouvement hélicoïdal du rotor, imposé par la liaison avec l'écrou fixe, provoque ainsi, selon que la valeur relative des deux pas de vis, un mouvement de sortie ou de rentrée de l'organe de sortie, mais avec un rapport de force pouvant être démultiplié.

En effet, si la première partie filetée possède un pas p1 et la seconde partie filetée un pas p2, le déplacement, pour un tour de rotor, de l'organe de sortie sera p2-p1. Cela entraine donc la possibilité, en travaillant avec des valeurs de pas proches, de réduire fortement le mouvement et donc d'amplifier la force de sortie de l'organe de commande par rapport au mode de réalisation N°1.

De plus dans ce cas on peut travailler avec des angles d'hélices relativement élevés, seul l'écart des pas défini le ratio de force, mais les angles d'hélices ainsi augmentés permettent d'augmenter sensiblement le rendement de la transformation rotation vers translation et de conduire à une optimisation de la taille de moteur. Il s'agit de combiner la solution selon le mode de réalisation N°1 avec le concept de la vis à pas différentiels, de façon à permettre un actionneur à forte poussée à basse température, pour des courses faibles, telles que le dosage de fluide dans vannes thermostatiques.

La présente invention couvre différentes constructions d'actionneurs linéaires faisant intervenir un arbre possédant deux parties filetées, et dont le mouvement hélicoïdal permet de créer la translation d'un organe de sortie. Ces constructions sont caractérisées par le fait que :
- L'organe de commande est en liaison glissière avec le boitier de l'actionneur
- L'ensemble mobile qui entraine le mouvement linéaire de l'organe de commande, est guidé uniquement au travers de deux liaisons hélicoïdales.
- Pour les deux premiers modes de réalisation décrits à titre d'exemples non limitatifs, l'aimant moteur est entrainé selon un mouvement hélicoïdal. L'aimant est surmoulé sur l'axe fileté entrainant l'organe de commande.
- Pour le troisième mode de réalisation décrit, l'axe fileté central suivant selon un mouvement hélicoïdal est entrainé par un réducteur de type roue et vis sans fin. L'organe de commande est en liaison glissière avec un flasque, qui possède différentes positions angulaires permettant un réglage manuel de la position linéaire de l'organe de commande indépendamment de son déplacement piloté par le moteur électrique.

## Revendications

1. Actionneur électrique comprenant une tige filetée actionnée en rotation par un moyen motorisé, ladite tige filetée étant déplacée selon un mouvement hélicoïdal, et présentant une zone d'entrainement (10) prolongée de part et d'autre par deux zones filetées (4, 6), l'une desdites zones filetées coopérant avec un écrou fixe, **caractérisé en ce que** l'autre desdites zones filetées coopère avec un écrou solidaire d'un organe de commande mobile en translation, selon un axe parallèle à l'axe de ladite zone filetée.

2. Actionneur électrique selon la revendication 1 **caractérisé en ce que** ledit moyen motorisé est constitué par un stator interagissant électromagnétiquement avec un rotor muni d'un aimant permanent, lié mécaniquement à ladite zone d'entraînement.

3. Actionneur électrique selon la revendication 2 **caractérisé en ce que** ledit aimant est surmoulé sur l'axe fileté entrainant l'organe de commande.

4. Actionneur électrique selon la revendication 1 **caractérisé en ce que** ledit moyen motorisé est constitué par une vis sans fin entraînant une roue dentée formant ladite zone d'entraînement.

5. Actionneur électrique selon la revendication 1 **caractérisé en ce que** l'organe de commande est en liaison glissière avec un flasque, qui possède différentes positions angulaires permettant un réglage manuel de la position linéaire de l'organe de commande indépendamment de son déplacement piloté par le moteur électrique.

6. Actionneur électrique selon l'une quelconque des revendications précédentes **caractérisé en ce que** les pas desdites zones filetées (4, 6) sont différents.

## Patentansprüche

1. Elektrisches Stellglied mit einer Gewindestange, die durch ein motorbetriebenes Mittel in Drehung versetzt und in einer spiralförmigen Bewegung bewegt wird, das einen Antriebsbereich (10) aufweist, der auf beiden Seiten durch zwei Gewindebereiche (4, 6) verlängert wird, wobei einer der Gewindebereiche mit einer festen Mutter zusammenwirkt, **dadurch gekennzeichnet, dass** der andere Gewindebereich mit einer Mutter zusammenwirkt, die fest mit einem Steuerelement verbunden ist, das auf einer Achse parallel zur Achse des Gewindebereichs translatorisch beweglich ist.

2. Elektrisches Stellglied nach Anspruch 1, **dadurch gekennzeichnet, dass** das motorbetriebene Mittel aus einem Stator besteht, der elektromagnetisch in Wechselwirkung steht mit einem Rotor mit Dauermagnet, der mechanisch mit dem Antriebsbereich verbunden ist.

3. Elektrisches Stellglied nach Anspruch 2, **dadurch gekennzeichnet, dass** der Magnet auf die das Steuerelement antreibende Gewindeachse aufgeformt ist.

4. Elektrisches Stellglied nach Anspruch 1, **dadurch gekennzeichnet, dass** das motorbetriebene Mittel aus einer Schnecke besteht, die ein Zahnrad antreibt, das den Antriebsbereich bildet.

5. Elektrisches Stellglied nach Anspruch 1, **dadurch gekennzeichnet, dass** das Stellglied in gleitender Verbindung mit einem Flansch steht, der unterschiedliche Winkelstellungen für die manuelle Einstellung der linearen Position des Steuerelements aufweist, unabhängig von dessen Bewegung, die durch den Elektromotor gesteuert wird.

6. Elektrisches Stellglied nach einem der vorhergehenden Ansprüche, **dadurch gekennzeichnet, dass** die Steigungen der Gewindebereiche (4, 6) unterschiedlich sind.

## Claims

1. An electric actuator comprising a threaded rod rotated by a motorized means, said threaded rod being moved in a helical movement, and having a drive zone (10) extended on either side by two threaded zones (4, 6), one of said threaded zones cooperating with a stationary nut, **characterized in that** the other of said threaded zones cooperates with a nut integral with a control member movable in translation, along an axis parallel to the axis of said threaded zone.

2. An electric actuator according to claim 1, **characterized in that** said motor means consists of a stator electromagnetically interacting with a rotor provided with a permanent magnet, mechanically linked to said drive zone.

3. An electric actuator according to claim 2, **characterized in that** said magnet is overmolded on the threaded axis driving the control member.

4. An electric actuator according to claim 1, **characterized in that** said motorized means consists of a worm driving a gear wheel forming said drive zone.

5. An electric actuator according to claim 1, **characterized in that** the control member is in sliding connection with a flange, which has different angular positions enabling the manual adjustment of the linear position of the control member independently of the movement thereof controlled by the electric motor.

6. An electric actuator according to any one of the preceding claims, **characterized in that** the pitches of said threaded zones (4, 6) are different.
